# FASCICULE DE BREVET EUROPEEN

(11) **EP 0 994 585 B1**
(45) Date de publication et mention de la délivrance du brevet: **26.11.2003**
(21) Numéro de dépôt: 99402527.8
(22) Date de dépôt: 14.10.1999
(51) Int. Cl.: H04B 10/17, H04B 10/155, H04J 14/02

(54) **Egalisation de puissance dans un système de transmission a multiplexage en longueur d'onde presentant une pluralité d'amplificateurs**
Leistungsausgleich in einem wellenlängenmultiplexierten optischen Übertragungssystem mit mehreren Verstärkern
Power equalisation in a WDM optical transmission system comprising several amplifiers

(30) Priorité: 15.10.1998 FR 9812932
(43) Date de publication de la demande: 19.04.2000
(73) Titulaire: ALCATEL, 75008 Paris (FR)
(72) Inventeur: Gautheron, Olivier, 78180 Montigny le Bretonneux (FR); Letellier, Vincent, 75013 Paris (FR)
(74) Mandataire: Lamoureux, Bernard

(56) Documents cités:
- EP-A- 0 744 797
- WO-A-98/06191
- US-A- 5 283 686
- US-A- 5 428 635

## Description

La présente invention concerne le domaine des transmissions par fibre optique, et plus particulièrement les systèmes de transmissions par fibres optiques à multiplexage en longueur d'onde présentant une pluralité de répéteurs.

Dans de tels systèmes sont prévus à intervalles réguliers des amplificateurs optiques, pour compenser la perte de ligne. Ces amplificateurs sont habituellement associés à des filtres de sorte à présenter un gain aussi plat que possible sur toute la plage de longueur d'onde utilisée dans le système de transmission. On cherche à obtenir dans une telle chaîne d'amplificateurs une puissance des signaux transmis dans le système identique en sortie de chacun des amplificateurs; ceci permet de limiter les effets non-linéaires, notamment pour des débits élevés.

Des solutions à ce problème ont déjà été proposées. Il est ainsi connu d'inclure dans chaque amplificateur un circuit électrique permettant un contrôle à distance du gain de chaque amplificateur, depuis le terminal du système de transmission. Cette solution présente l'inconvénient d'impliquer une électronique de contrôle supplémentaire dans chaque amplificateur. En outre, il est nécessaire d'envoyer depuis le terminal un signal de contrôle, par exemple sous forme d'une surmodulation à la longueur d'onde des données, ce qui peut nuire à la qualité de la transmission.

Dans le cas de transmissions à multiplexage en longueur d'onde, il a aussi été proposé d'ajouter une longueur d'onde de charge aux différentes longueurs d'onde du multiplex ou peigne de longueurs d'ondes. La puissance à l'émission de cette longueur d'onde de charge peut être ajustée de sorte à modifier la puissance de sortie des signaux du multiplex, pour une puissance de sortie totale de chaque amplificateur donnée. Cette solution présente elle aussi des inconvénients. La puissance de la longueur d'onde de charge peut être très supérieure à celle des signaux du multiplex, ce qui peut provoquer une dégradation de la transmission pour les longueurs d'onde du multiplex proches de cette longueur d'onde de charge. Par ailleurs, la bande des amplificateurs doit être plus importante pour permettre le passage de la longueur d'onde de charge. Enfin, du fait que la forme du gain optique n'est pas plate le long du système de transmission, le rapport entre la puissance optique à la longueur d'onde de charge et la puissance optique des signaux du multiplex varie le long du système, et la puissance de sortie n'est donc pas la même pour tous les amplificateurs.

EP-A-0 829 980 décrit un système de transmission à multiplexage en longueur d'onde, dans lequel un signal multiplexé est ajouté dans le système. Pour contrôler les puissances respectives du signal d'origine et du signal transmis, ce document propose d'utiliser une lumière de charge, à une longueur d'onde en dehors de la plage du multiplex. Le réglage de la puissance de cette lumière de charger permet d'ajuster les puissances aux longueurs d'onde du multiplex.

EP-A-0 836 254 propose un procédé de fabrication d'un filtre destiné à être associé à un amplificateur, de sorte à assurer la platitude du gain de l'amplificateur. Ce document propose d'envoyer dans l'amplificateur sans filtre des lumières aux différentes longueurs d'ondes du multiplex, à la puissance de consigne, et d'y ajouter une lumière à une longueur d'onde variable. Pour chaque valeur de la longueur d'onde variable, on mesure l'atténuation de la longueur d'onde variable nécessaire pour que la puissance de sortie de l'amplificateur à cette longueur d'onde variable se trouve dans la plage de puissance de sortie des longueurs d'onde du multiplex. Ce procédé permet de déterminer les caractéristiques du filtre nécessaire à assurer une bonne platitude du gain de l'amplificateur. Ce procédé ne fournit pas une solution au problème de l'égalisation de la puissance de sortie des différents amplificateurs d'une chaîne d'amplificateurs.

L'invention propose une solution à ce problème d'égalisation de la puissance des signaux transmis dans le système, en sortie de chacun des amplificateurs d'un système de transmission à multiplexage en longueur d'onde.

Plus précisément, l'invention propose un moyen d'émission d'un signal de charge pour un système de transmission à fibre optique à multiplexage de longueur d'onde, présentant une pluralité d'amplificateurs, ledit moyen d'émission comprenant une source de signal large bande, en dehors des longueurs d'onde du multiplex, ce signal formant ledit signal de charge.

Dans un mode de réalisation, le moyen d'émission présente une puissance de sortie variable.

Avantageusement, le signal de charge s'étend sur la bande des amplificateurs, en dehors des longueurs d'onde du multiplex.

De préférence, le signal de charge s'étend sur la bande des amplificateurs, entre les longueurs d'onde du multiplex.

Dans un mode de réalisation, le moyen d'émission comprend un amplificateur, et une pluralité de filtres en sortie du dit amplificateur.

Dans un autre mode de réalisation, les filtres sont des filtres réjecteurs autour des longueurs d'onde du multiplex.

L'invention propose encore un système de transmission à fibre optique à multiplexage de longueur d'onde présentant une pluralité d'amplificateurs, et un moyen d'émission d'un signal de charge présentant une large bande en dehors des longueurs d'onde du multiplex.

On connaît du document EP-A-744 797 une source de longueurs d'ondes multiples utilisant un signal large bande qui est émis vers une pluralité de filtres de Bragg en série.La partie réfléchie par ces filtres forme un signal à multiplexage en longueur d'onde. L'autre partie, non réfléchie par les filtres de Bragg, forme un signal large bande qui est émis vers une terminaison absorbante.

D'autres caractéristiques et avantages de l'invention apparaîtront à la lecture de la description qui suit de modes de réalisation de l'invention, donnée à titre d'exemple et en référence aux dessins annexés, qui montrent:
- figure 1, une représentation schématique du spectre émis à l'entrée d'un système de transmission selon l'invention;
- figure 2, une représentation schématique du spectre reçu en sortie d'un système de transmission selon l'invention;
- figure 3, une représentation schématique d'un montage permettant d'obtenir un signal de charge selon l'invention.

L'invention propose, pour assurer l'égalisation du gain d'une chaîne d'amplificateurs, d'utiliser un signal de charge à large bande, et non plus à bande étroite comme le propose l'art antérieur. Le signal de charge peut s'étendre sur toute la bande des amplificateurs, en dehors des longueurs d'onde du multiplex, i. e. sauf au voisinage de chacune des longueurs d'onde du multiplex. Autrement dit, le signal de charge peut présenter un spectre sensiblement complémentaire du spectre du multiplex dans la bande des amplificateurs.

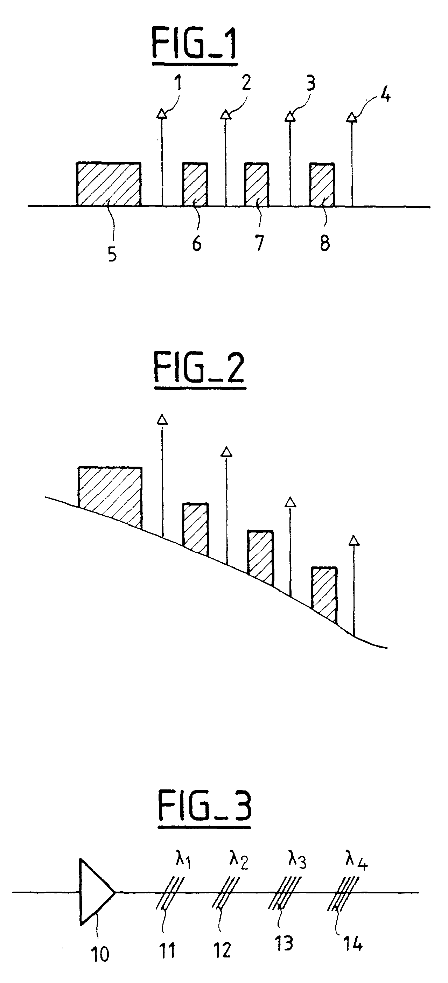

La figure 1 montre une représentation schématique du spectre émis à l'entrée d'un système de transmission selon l'invention. On reconnaît sur la figure 1 les différentes longueurs d'ondes du multiplex, représentées par des flèches noires 1 à 4. Le spectre du signal de charge est représenté par les surfaces hachurées sur la figure: dans l'exemple, le signal de charge s'étend entre les longueurs d'onde du multiplex, et aussi à des longueurs d'ondes inférieures à celles du multiplex. Le signal de charge de la figure présente ainsi quatre composantes, à savoir une composante 5 à des longueurs d'onde inférieures à celles du multiplex, et trois composantes 6 à 8 entre les longueurs d'onde du multiplex.

Dans le spectre émis à l'entrée du système de transmission de l'invention, les signaux pour les différentes longueurs d'onde du multiplex présentent une puissance identique; les différentes composantes du signal de charge présentent une puissance sensiblement constante.

La figure 2 montre une représentation schématique du spectre reçu en sortie d'un système de transmission selon l'invention; comme le montre la figure, en sortie de la chaîne d'amplificateurs, le signal de charge présente une puissance totale qui est sensiblement égale à la puissance émise. Toutefois, les différentes composantes du signal de charge présentent des puissances qui peuvent être assez différentes, en fonction de la forme de la fonction de gain sur la bande des amplificateurs, et notamment si le gain n'est pas plat sur la bande des amplificateurs.

Comme dans les systèmes de l'art antérieur, la présence du signal de charge permet d'égaliser les variations de puissance de sortie des signaux du multiplex, et améliore les caractéristiques de transmission du système en égalisant la puissance des signaux du multiplex en sortie des différents amplificateurs de la liaison.

Toutefois, comme le signal de charge présente une large bande, la puissance de chacune des composantes spectrales peut être plus faible que dans les systèmes de l'art antérieur. L'invention permet ainsi d'éviter les inconvénients provoqués dans les systèmes connus par les différences de puissance entre le signal de charge et les signaux du multiplex. L'invention permet ainsi de limiter les interactions entre les signaux du multiplex et le signal de charge, ou les dégradations des signaux du multiplex du fait d'une trop grande disparité de puissance.

En outre, comme le signal de charge s'étend entre les canaux du multiplex, il n'est pas nécessaire pour obtenir les resultats de l'invention d'augmenter la largeur des amplificateurs du système de transmission.

Enfin, le signal de charge de l'invention est moins sensible que le signal de charge de l'art antérieur aux variations de la forme du gain le long du système de transmission. Quelles que soient les variations de la forme du gain des amplificateurs, la puissance totale du signal de charge reste sensiblement constante, dans la mesure où le signal de charge peut s'étendre sur l'ensemble de la bande des amplificateurs. De la sorte, pour une puissance de sortie des amplificateurs sensiblement constante, la puissance totale des signaux du multiplex reste aussi sensiblement constante, et ce même si le gain n'est pas parfaitement plat sur toute la bande des amplificateurs.

La puissance du signal de charge peut être adaptée, en fonction de la puissance souhaitée des signaux du multiplex.

L'invention propose en outre un montage permettant d'obtenir un tel signal de charge. La figure 3 montre une représentation schématique d'un montage permettant d'obtenir un signal de charge large bande selon l'invention. Le montage de la figure 3 comprend une source de lumière blanche, en l'espèce un amplificateur 10 dont le bruit d'émission spontanée constitue une lumière blanche. La lumière blanche traverse ensuite une série de filtres réjecteurs 11 à 14, par exemple des réseaux de Bragg. Chacun des filtres élimine dans la lumière blanche les longueurs d'onde au voisinage d'une des longueurs d'onde du multiplex. On obtient ainsi en sortie du montage un signal de charge large bande, qui s'étend sur la bande des amplificateurs, sauf autour des longueurs d'onde du multiplex utilisé.

A titre d'exemple, un montage du type de celui de la figure 3 permet d'obtenir un signal de charge qui s'étend sur toute la bande de l'amplificateur, sauf dans une plage de 0,5 nm autour de la valeur nominale de chaque longueur d'onde du multiplex. La puissance du signal de charge peut être adaptée simplement en réglant le gain de l'amplificateur 10.

Bien entendu, la présente invention n'est pas limitée aux exemples et modes de réalisation décrits et représentés, mais elle est susceptible de nombreuses variantes accessibles à l'homme de l'art. On peut notamment obtenir un signal de charge par d'autres moyens que ceux décrits en référence à la figure 3. Le signal de charge peut s'étendre sur une partie seulement de la bande des amplificateurs. On pourrait aussi appliquer l'invention à des systèmes de transmission monocanaux, avec un signal de charge large bande s'étendant de part et d'autre du canal.

## Revendications

1. Un moyen d'émission d'un signal de charge pour un système de transmission à fibre optique à multiplexage en longueur d'onde présentant une pluralité d'amplificateurs, ledit moyen d'émission comprenant une source de signal large bande (5-8) en dehors des longueurs d'onde du multiplex, ce signal formant ledit signal de charge.

2. Le moyen d'émission selon la revendication 1, **caractérisé en ce qu'**il présente une puissance de sortie variable.

3. Le moyen d'émission selon la revendication 1 ou 2, **caractérisé en ce que** ledit signal large bande s'étend sur la bande des amplificateurs, en dehors des longueurs d'onde du multiplex.

4. Le moyen d'émission selon la revendication 1, 2 ou 3, **caractérisé en ce que** ledit signal large bande s'étend sur la bande des amplificateurs, entre les longueurs d'onde du multiplex.

5. Le moyen d'émission selon ('une des revendications 1 à 4, **caractérisé en ce qu'**il comprend un amplificateur (10), et une pluralité de filtres (11-14) en sortie du dit amplificateur.

6. Le moyen d'émission selon la revendication 5, **caractérisé en ce que** les dits filtres sont des filtres réjecteurs autour des longueurs d'onde du multiplex.

7. Un système de transmission à fibre optique à multiplexage de longueur d'onde, présentant une pluralité d'amplificateurs, **caractérisé par** un moyen d'émission d'un signal de charge selon l'une des revendications 1 à 6.

## Claims

1. Emission means for emitting a loading signal for a WDM optical fiber transmission system having a plurality of amplifiers, said emission means comprising a source of a signal (5-8) of wide band, not including the wavelengths (1-4) of the multiplex, said signal forming said loading signal.

2. Emission means according to claim 1, **characterized in that** they present variable output power.

3. Emission means according to claim 1 or 2, **characterized in that** said wideband signal extends over the bandwidth of the amplifiers, not including the wavelengths of the multiplex.

4. Emission means according to claim 1, 2, or 3, **characterized in that** said wideband signal extends over the bandwidth of the amplifiers, between the wavelengths of the multiplex.

5. Emission means according to any one of claims 1 to 4, **characterized in that** they comprise an amplifier (10) and a plurality of filters (11-14) at the output from said amplifier.

6. Emission means according to claim 5, **characterized in that** said filters are stop filters at around the wavelengths of the multiplex.

7. A WDM optical fiber transmission system having a plurality of amplifiers, the system being **characterized by** emitting means according to any one of claims 1 to 6, for emitting a loading signal.

## Patentansprüche

1. Mittel zum Senden eines Lastsignals für ein Lichtleitfaser-Übertragungssystem mit Wellenlängenmultiplexierung, das mehrere Verstärker aufweist, wobei das Sendemittel eine Quelle (5-8) für ein Breitbandsignal umfasst, das außerhalb der Multiplexierungswellenlängen liegt, wobei dieses Signal das Lastsignal bildet.

2. Sendemittel nach Anspruch 1, **dadurch gekennzeichnet, dass** es eine variable Ausgangsleistung aufweist.

3. Sendemittel nach Anspruch 1 oder 2, **dadurch gekennzeichnet, dass** sich das Breitbandsignal über das Band der Verstärker außerhalb der Multiplexierungswellenlängen erstreckt.

4. Sendemittel nach Anspruch 1, 2 oder 3, **dadurch gekennzeichnet, dass** sich das Breitbandsignal über das Band der Verstärker zwischen den Multiplexierungswellenlängen erstreckt.

5. Sendemittel nach einem der Ansprüche 1 bis 4, **dadurch gekennzeichnet, dass** es einen Verstärker (10) und mehrere Filter (11-14) am Ausgang dieses Verstärkers umfasst.

6. Sendemittel nach Anspruch 5, **dadurch gekennzeichnet, dass** die Filter Sperrfilter in der Umgebung der Multiplexierungswellenlängen sind.

7. Lichtleitfaser-Übertragungssystem mit Wellenlängenmultiplexierung, das mehrere Verstärker aufweist, **gekennzeichnet durch** ein Mittel zum Senden eines Lastsignals nach einem der Ansprüche 1 bis 6.
